# EUROPÄISCHE PATENTSCHRIFT

(11) **EP 1 165 641 B1**
(45) Veröffentlichungstag und Bekanntmachung des Hinweises auf die Patenterteilung: **02.05.2003**
(21) Anmeldenummer: 00904998.2
(22) Anmeldetag: 01.02.2000
(51) Int. Cl.: C08F 236/04, C08F 236/14, C08L 9/00

(54) **KAUTSCHUKMISCHUNGEN BASIEREND AUF AMINOISOPREN-POLYMEREN UND DEREN VERWENDUNG ZUR HERSTELLUNG ROLLWIDERSTANDSARMER REIFENLAUFFLÄCHEN**
RUBBER MIXTURES BASED ON AMINO-ISOPRENE POLYMERS AND THEIR USE IN THE PRODUCTION OF TIRE TREADS WITH LOW ROLLING RESISTANCE
MELANGES DE CAOUTCHOUC A BASE DE POLYMERES D'AMINO-ISOPRENES ET LEUR UTILISATION POUR PRODUIRE DES BANDES DE ROULEMENT A FAIBLE RESISTANCE AU ROULEMENT

(30) Priorität: 03.02.1999 DE 19904357
(43) Veröffentlichungstag der Anmeldung: 02.01.2002
(73) Patentinhaber: Bayer Aktiengesellschaft, 51368 Leverkusen (DE)
(72) Erfinder: STADLER, Reimund, /// (DE); SCHOLL, Thomas, D-51469 Bergisch Gladbach (DE); OBRECHT, Werner, D-47447 Moers (DE); MORSCHHÄUSER, Roman, D-55122 Mainz (DE); MANNEBACH, Gerd, D-56294 Münstermaifeld (DE)
(86) Internationale Anmeldenummer: EP0000786
(87) Internationale Veröffentlichungsnummer: WO00046263

(56) Entgegenhaltungen:
- EP-A- 0 849 321
- MANNEBACH G ET AL: "THE ANIONIC POLYMERIZATION OF DIALKYLAMINOISOPRENES - 5- COPOLYMERIZATION WITH 1,3-BUTADIENE" MACROMOLECULAR SYMPOSIA,DE,WILEY VCH, WEINHEIM, Bd. 132, 1. Juli 1998 (1998-07-01), Seiten 245-248, XP000790739 ISSN: 1022-1360

## Beschreibung

Die vorliegende Erfindung betrifft Kautschukmischungen basierend auf Homo- und Copolymeren von speziellen Aminoisoprenen und Füllstoffen sowie deren Vulkanisate. Die erfindungsgemäßen Kautschukmischungen bzw. deren Vulkanisate eignen sich zur Herstellung von hochverstärkten, abriebbeständigen Formkörpern, insbesondere zur Herstellung von Reifen, die einen niedrigen Rollwiderstand und einen hohen Abriebwiderstand aufweisen.

Doppelbindungshaltige anionisch polymerisierte Lösungskautschuke, wie Lösungs-Polybutadien und Lösungs-Styrol/Butadien-Kautschuke, besitzen gegenüber entsprechenden Emulsionskautschuken Vorteile bei der Herstellung rollwiderstandsarmer Reifenlaufflächen. Die Vorteile liegen u.a. in der Steuerbarkeit des Vinylgehalts und der damit verbundenen Glastemperatur und der Molekülverzweigung. Hieraus ergeben sich in der praktischen Anwendung besondere Vorteile in der Relation von Naßrutschfestigkeit und Rollwiderstand des Reifens. So beschreibt US-PS 5 227 425 die Herstellung von Reifenlaufflächen aus einem Lösungs-SBR-Kautschuk und Kieselsäure. Zur weiteren Verbesserung der Eigenschaften sind zahlreiche Methoden zur Endgruppen-Modifizierung entwickelt worden, wie in EP-A 334 042 beschrieben, mit Dimethylaminopropyl-acrylamid, oder, wie in EP-A 447 066 beschrieben, mit Silylethern. Durch das hohe Molekulargewicht der Kautschuke ist der Gewichtsanteil der Endgruppe jedoch gering und kann daher die Wechselwirkung zwischen Füllstoff und Kautschukmolekül nur wenig beeinflussen. Es war eine Aufgabe der vorliegenden Erfindung Lösungs-Kautschuke mit einem deutlich höheren Gehalt an aminischen Gruppen herzustellen.

US-PS 3 544 532 beschreibt kationische ungesättigte Polymere, zu deren Herstellung u. a. auch Polymerisate von 2-Dialkylaminomethyl-1.-3-butadien verwendet werden. Diese Polymere wurden durch Emulsionspolymerisation oder durch nachträgliche polymeranaloge Umsetzungen hergestellt und unterscheiden sich daher in der Mikrostruktur (1.2-Vinyl-Gehalt, cis/trans-Verhältnis, Langkettenverzweigung, Molekulargewichtsverteilung, Verteilung des Comonomers im Copolymer) von den anionisch gestarteten Lösungspolymerisaten der vorliegenden Erfindung. Ein Hinweis auf eine Reifenanwendung wird nicht gegeben.

Emulsionkautschuke aus Dienen und aminogruppenhaltigen Vinylmonomeren und ihre Verwendung in kieselsäuregefüllten Reifenlaufflächen sind aus EP 819 731 bekannt. Durch die Herstellung unter radikalischen Polymerisationsbedingungen können jedoch, wie oben erwähnt, die bekannten Vorteile anionisch polymerisierter Löungskautschuke nicht erreicht werden. Die dort eingesetzten Monomere unterscheiden sich zudem strukturell von den Dialkylaminoisopren-Monomeren der vorliegenden Erfindung.

Aufgabe der vorliegenden Erfindung war es daher, Mischungen Aminogruppen-haltiger Lösungskautschuke zu Verfügung zu stellen, aus denen sich Reifen mit niedrigerem Rollwiderstand sowie hoher mechanischer Festigkeit und verbessertem Abriebverhalten herstellen lassen.

Gegenstand der vorliegenden Erfindung sind daher Kautschukmischungen, bestehend aus einem Kautschuk und 10 bis 500 Gew.-Teilen, bevorzugt 20 bis 200 Gew.-Teilen, eines Füllstoffs, bezogen auf 100 Gew.-Teile Kautschuk, wobei der Kautschuk durch Polymerisation in Lösung hergestellt wurde und einen Gehalt an einpolymerisierten Aminoisoprenen der Formel 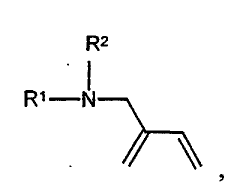 in der
- R¹ und R²: unabhängig voneinander für C₁-C₁₈-Alkyl- oder C₅-C₁₂-Cycloalkylreste, die gegebenfalls durch ein oder mehrere Stickstoff-, Sauerstoff- und/oder Schwefelatome unterbrochen sein können, oder gemeinsam einen Ring bilden können, sowie für C₆-C₁₈-Aryl- oder C₇-C₂₄-Alkylarylreste stehen,
von 0,01 bis 100 Gew.-%, bevorzugt 0,1 bis 10 Gew.-%, ein Gehalt an Diolefinen von 0 bis 99,99 Gew.-%, bevorzugt 55 bis 99,9 Gew.-%, sowie einen Gehalt an einpolymerisierten vinylaromatischen Monomeren von 0 bis 50 Gew.-%, bevorzugt 0 bis 45 Gew.-% besitzt, jeweils bezogen auf den Lösungskautschuk, und darüber hinaus ein mittleres Molgewicht (Zahlenmittel) von 10 000 bis 2 000 000 und eine Glasübergangstemperatur von -110°C bis +20°C aufweist.

Besonders bevorzugte Aminosioprene, die für die Polymerisation in Frage kommen, besitzen die folgenden Strukturen:

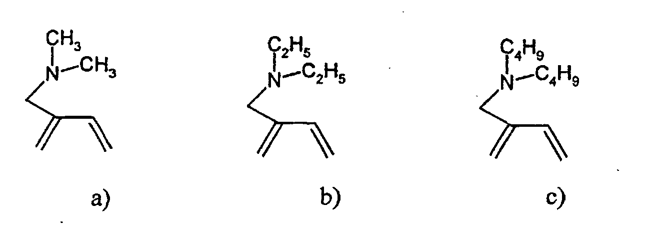

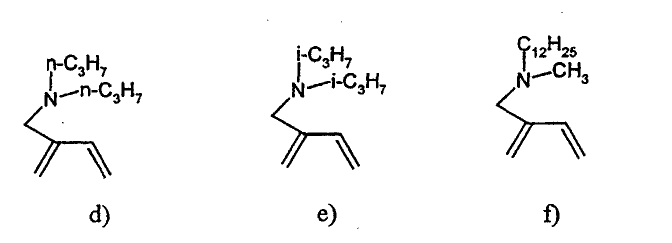

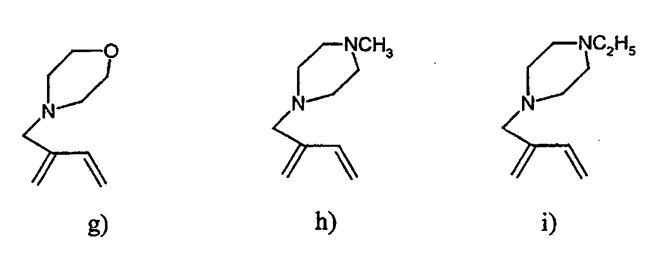

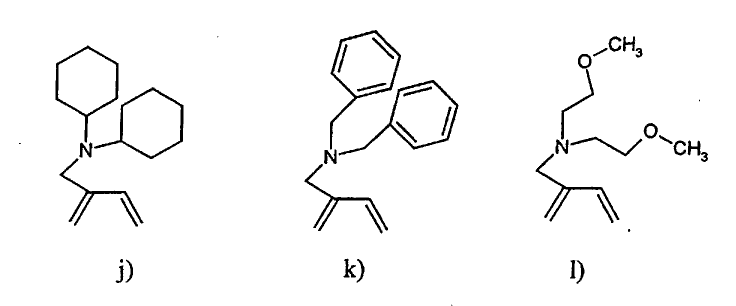

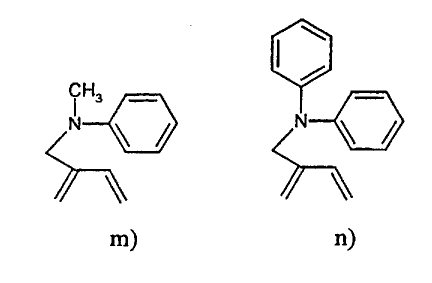

Als vinylaromatische Monomere, die für die Polymerisation eingesetzt werden können, seien beispielsweise genannt Styrol, o-, m- und p-Methylstyrol , p-tert.-Butylstyrol, α-Methylstyrol, Vinylnaphthalin, Divinylbenzol, Trivinylbenzol und/oder Divinylnaphthalin. Besonders bevorzugt wird Styrol eingesetzt.

Als Diolefine dienen erfindungsgemäß zur Polymerisation 1,3-Butadien, Isopren, 1,3-Pentadien, 2,3-Dimethylbutadien, 1-Vinyl-1,3-Butadien und/oder 1,3-Hexadien. Besonders bevorzugt werden 1,3-Butadien und Isopren eingesetzt.

Die erfindungsgemäß in die Kautschukmischungen einzusetzenden Kautschuke auf Basis von Aminoisopren-Monomeren und gegebenenfalls weiteren Diolefinen und vinylaromatischen Monomeren besitzen mittlere Molgewichte (Zahlenmittel) von bevorzugt 50.000 bis 1.000.000, Glastemperaturen von -110°C bis +20°C, bevorzugt -40°C bis 0°C sowie Mooney-Viskositäten ML 1+4 (100°C) von 10 bis 200, vorzugsweise 30 bis 150.

Die Herstellung der Aminoisoprene kann nach an sich bekannten Methoden erfolgen: Beispielsweise aus 2-Chlormethyl-1.3-butadien und sekundären Aminen, wie in US 3.544.532 beschrieben, oder aus sekundären Aminen, Formaldehyd, Allylalkohol, Dimethylsulfoxid und Kalium-tert.-butylat, wie in Angew. Chem. 102 (1990) 929 beschrieben. Die Struktur der verwendbaren sekundären Aminen ist hierbei in weiten Grenzen variierbar.

Die Herstellung der erfindungsgemäßen Kautschuke auf Basis von Aminoisoprenen erfolgt durch anionische Lösungspolymerisation, d.h. mittels eines Katalysators auf Alkalimetallbasis, bevorzugt in einem inerten Kohlenwasserstoff als Lösungsmittel. Zusätzlich können die bekannten Randomizer und Kontrollagentien für die Mikrostruktur des Polymers verwendet werden. Derartige anionische Lösungspolymerisationen sind bekannt und z.B. in I. Franta Elastomers and Rubber Compounding Materials: Elsevier 1989, Seite 73-74, 92-94 und in Houben-Weyl, Methoden der Organische Chemie, Thieme Verlag, Stuttgart, 1987, Band E 20, Seite 114-134 beschrieben.

Beispiele für geeignete Alkalimetall-Katalysatoren sind Lithium, Natrium, Kalium, Rubidium. Cäsiummetall und deren Kohlenwasserstoffverbindungen sowie Komplexvcrbindungen mit polaren organischen Verbindungen.

Besonders bevorzugt werden Lithium- und Natrium-Kohlenwasserstoffverbindungen mit 2 bis 20 Kohlenstoffatomen, beispielsweise Ethyllithium, n-Propyllithium, i-Propyllithium, n-Butyllithium, sec-Butyllithium, tetr. Octyllithium, n-Decyllithium, Phenyllithium,, 2-Naphthyllithium, 2-Butylphenyllithium, Cyclohexyllithium, 4-Cyclopentyllithium, 1.4-Dilithiobuten-2, Natriumnaphthalin, Natriumbiphenyl, Kalium-Tetrahydrofuran-Komplex, Kalium-Diethoxiethan-Komplex, Natrium-Tetramethylethylendiamin-Komplex. Die Katalysatoren können alleine oder im Gemisch eingesetzt werden.

Die Katalysatormengen liegen bei 0,1 bis 10 mMol/100 g Polymer, bevorzugt 0,5 bis 5 mMol/100 g Polymer.

Die anionische Lösungspolymerisation wird bevorzugt in einem Kohlenwasserstoff durchgeführt, kann aber auch in einem anderen Lösungsmittel, welches den Katalysator nicht zerstört, durchgeführt werden, beispielsweise in Tetrahydrofuran, Tetrahydropyran oder 1.4-Dioxan. Als Lösungsmittel geeignete Kohlenwasserstoffe sind beispielsweise aliphatische, cycloaliphatische oder aromatische Kohlenwasserstoffe mit 2 bis 12 Kohlenstoffatomen. Bevorzugte Lösungsmittel sind Propan, Butan, Pentan, Hexan, Cylohexan, Propen, Buten, 1-Penten, 2-Penten, 1-Hexene, 2-Hexen, Benzol, Toluol, Xylol. Die Lösungsmittel können alleine oder als Gemisch eingesetzt werden. Die geeignete Lösungsmittelmenge kann leicht durch Vorversuche ermittelt werden.

Die durch die anionische Lösungspolymerisation hergestellten Polymere können auch nach bekannten Methoden "gekoppelt" werden, beispielsweise mittels Dischwefeldichlorid oder durch Umsetzung des lebenden Polymeranions mit Siliciumtetrachlorid.

Als Füllstoffe kommen für die erfindungsgemäßen Kautschukmischungen alle bekannten in der Kautschukindustrie verwendeten Füllstoffe in Betracht, diese umfassend sowohl aktive als auch inaktive Füllstoffe.

Zu erwähnen sind:
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn-, Zr-,Tioxiden vorliegen;
- synthetische Silikate, wie Aluminiumsilikat, Erdalkaisilikat wie Magnesiumsilikat oder Calciumsilikat, mit BET-Oberflächen von 20 bis 400 m²/g und Primärteilchendurchmessern von 10 bis 400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Ruße. Die hierbei zu verwendenen Russe sind nach dem Flammruß, Furnaceoder Gasrußverfahren hergestellt und besitzen BET-Oberflächen von 20 bis 200 m²/g, z.B. SAF-, ISAF-, HAF-, FEF- oder GPF-Ruße;
- Kautschukgele, insbesondere solche auf Basis Polybutadien, Butadien/Styrol-Copolymere, Butadien/Acrylnitril-Copolymere und Polychloropren.

Bevorzugt werden als Füllstoffe eingesetzt hochdisperse Kieselsäuren und/oder Ruße.

Die genannten Füllstoffe können alleine oder im Gemisch eingesetzt werden. In einer besonders bevorzugten Ausführungsform enthalten die Kautschukmischungen als Füllstoffe ein Gemisch aus hellen Füllstoffen, wie hochdispersen Kieselsäuren, und Russen, wobei das Mischungsverhältnis von hellen Füllstoffen zu Russen bei 1:0,05 bis 1:20, bevorzugt 1:0,1 bis 1:10 liegt.

Die erfindungsgemäßen Kautschukmischungen können neben den erwähnten Aminoisoprenhaltigen-Lösungskautschuken noch andere Kautschuke enthalten, wie Naturkautschuk als auch andere Synthesekautschuke.

Bevorzugte Synthesekautschuke sind beispielsweise bei W. Hofmann, Kautschuktechnologie, Gentner Verlag, Stuttgart 1980 und I. Franta, Elastomers and Rubber Coumpounding Materials, Elsevier, Amsterdam 1989 beschrieben. Sie umfassen u.a.
- BR -: Polybutadien
- ABR -: Butadien/Acrylsäure-C₁₋₄-alkylester-Copolymere
- CR: Polychloropren
- IR -: Polyisopren
- SBR -: Styrol/Butadien-Copolymerisate mit Styrolgehalten von 1 bis 60, vorzugsweise 20 bis 50 Gew. %
- IIR -: Isobutylen/Isopren-Copolymerisate
- NBR -: Butadien/Acrylnitril-Copolmere mit Acrylnitrilgehalten von 5 bis 60, vorzugsweise 10 bis 40 Gew. %
- HNBR -: teilhydrierter oder volllständig hydrierter NBR-Kautschuk
- EPDM -: Ethylen/Propylen/Dien-Copolymerisate
sowie Mischungen dieser Kautschuke. Für die Herstellung von Kfz-Reifen, die oberflächenmodifizierte Füllstoffe enthalten, sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen nach EP-A 447 066 modifiziert sein können, Polybutadienkautschuk mit hohem 1,4-cis-Gehalt (>90 %), der mit Katalysatoren auf Basis Ni, Co, Ti oder Nd hergestellt wurde, sowie Polybutadienkautschuk mit einem Vinylgehalt von bis zu 75 % sowie deren Mischungen von Interesse.

Wie zuvor erwähnt, können den erfindungsgemäßen Kautschukmischungen neben dem Aminoisoprenhaltigen-Lösungskautschuk noch zusätzliche Kautschuke zugemischt werden. Deren Menge liegt üblicherweise im Bereich von 0,5 bis 70, bevorzugt 10 bis 50 Gew.-%, bezogen auf die gesamte Kautschukmenge in der Kautschukmischung. Die Menge an zusätzlich zugegebenen Kautschuken richtet sich wieder nach dem jeweiligen Verwendungszweck der erfindungsgemäßen Kautschukmischungen.

Selbstverständlich können die erfindungsgemäßen Kautschukmischungen noch andere Kautschukhilfsmittel enthalten, die beispielsweise der Vernetzung der aus den Kautschukmischungen hergestellten Vulkanisate dienen, oder die die physikalischen Eigenschaften der aus den erfindungsgemäßen Kautschukmischungen hergestellten Vulkanisate für deren speziellen Einsatzzweck verbessern.

Als Vernetzeragentien können beispielsweise Schwefel oder Schwefel-liefernde Verbindungen eingesetzt werden, so wie Radikale-liefernde Vernetzeragentien, wie organische Peroxide. Bevorzugt wird Schwefel als Vernetzeragenz eingesetzt. Darüber hinaus können, wie erwähnt, die erfindungsgemäßen Kautschukmischungen weitere Hilfsmittel, wie die bekannten Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, enthalten.

Die erfindungsgemäßen Kautschukhilfsmittel werden in den üblichen, bekannten Mengen eingesetzt, wobei sich die eingesetzte Menge nach dem späteren Verwendungszweck der Kautschukmischungen richtet. Üblich sind beispielsweise Mengen an Kautschukhilfsmitteln im Bereich von 2 bis 70 Gew.-Teilen, bezogen auf 100 Gew.-Teile der Gesamtrnenge an vorhandenem Kautschuk.

Für die erfindungsgemäßen Kautschukmischungen, die mit hochaktiven Kieselsäuren gefüllt sind, ist die Verwendung von zusätzlichen Eüllstoffaktivatoren besonders vorteilhaft. Bevorzugte Füllstoffaktivatoren sind schwefelhaltige Silylether, insbesondere Bis-(trialkoxisilyl-alkyl)-polysulfide, wie sie in DE 2141 159 und DE 2 255 577 beschrieben sind. Darüber hinaus kommen in Frage oligomere und/oder polymere schwefelhaltige Silylether entsprechend der Beschreibung in DE 4 435 311 und EP 670 347. Außerdem sind einzusetzen Mercapatoalkyltrialkoxisilane, insbesondere Mercaptopropyltriethoxisilan und Thiocyanatoalkylsilylether (siehe DE 19 544 469). Die Füllstoffaktivatoren werden in üblichen Mengen eingesetzt, d.h. in Mengen von 0,1 bis 15 Gew.-Teile, bezogen auf 100 Gew.-Teile der gesamten Kautschukmenge.

Die erfindungsgemäßen Kautschukmischungen können z.B. hergestellt werden durch Abmischung der Aminoisoprenhaltigen-Lösungskautschuke und gegebenfalls weiteren Kautschuken mit den entsprechenden Füllstoffen und Kautschukhilfsmitteln in geeigneten Mischapparaturen, wie Knetern, Walzen oder Extrudern.

Ein weiterer Gegenstand der vorliegenden Erfindung ist die Verwendung der erfindungsgemäßen Kautschukmischungen zur Herstellung von Vulkanisaten, die wiederum für die Herstellung von hochverstärkten Kautschuk-Formkörpern, insbesondere für die Herstellung von Reifen, dienen.

### Beispiele

### Beispiel 1:

In einem Rührautoklaven wird eine Lösung aus 120,1 g (1,15 mol) Styrol, 175,0 g (3,24 mol) Butadien und 4,93 g (0,044 mol) 5-(N.N-Dimethylamino)-isopren in 2300 ml trockenem Hexan vorgelegt. Bei 35°C setzt man 1,54 ml einer 1,3 molaren sec-Butyllithium-Lösung in Cyclohexan/Hexan hinzu. Die Reaktion ist exotherm und wird durch Kühlung auf 60°C begrenzt. Nach 1,5 Stunden wird die Polymerisation durch Zugabe von 0,1 ml Methanol abgebrochen. Anschließend wurde das Polymer in 14 1 Methanol gefällt und getrocknet.

Der so erhaltene Dimethylaminoisopren-SBR-Kautschuk besaß ein mittleres Molekulargewicht (Zahlenmittel) von 120.000, einen Styrolanteil von 36 Gew.-%, der Butadienanteil betrug 62,4 Gew.-% mit 16 % 1,2-Vinylgehalt (bezogen auf Gesamtpolymer); der Gehalt an einpolymerisiertem Dimethylaminoisopren betrug 1,6 Gew.-%. Glastemperatur -33°C, Viskosität ML 1+4 (100° C): 20.

### Beispiel 2:

In einem Rührautoklaven wird eine Lösung aus 116,1 g (1,12 mol) Styrol, 160,0 g (2,96 mol) Butadien und 23,8 g (0,215 mol) 5-(N.N-Dimethylamino)-isopren in 2300 ml trockenem Hexan vorgelegt. Bei 35°C setzt man 1,54 ml einer 1,3 molaren sec-Butyllithium-Lösung in Cyclohexan/Hexan hinzu. Die Reaktion ist exotherm und wird durch Kühlung auf 60°C begrenzt. Nach 1,5 Stunden wird die Polymerisation durch Zugabe von 0,1 ml Methanol abgebrochen. Anschließend wurde das Polymer in 14 1 Methanol gefällt und getrocknet.

Der so erhaltene Dimethylaminoisopren-SBR-Kautschuk besaß ein mittleres Molekulargewicht (Zahlenmittel) von 120.000, einen Styrolanteil von 36 Gew.-%, der Butadienanteil betrug 56 Gew.-% mit 17 % 1.2-Vinylgehalt (bezogen auf Gesamtpolymer); der Gehalt an einpolymerisiertem Dimethylaminoisopren betrug 8 Gew.-%. Glastemperatur -48°C.

### Beispiel 3:

Die folgenden Kautschukmischungen wurden bei 130°C in einem 1,5 1 Kneter hergestellt. Zum Schluß wurden Schwefel und Beschleuniger bei 50°C auf einer Walze zugemischt.

| | **Vergleichsbeispiel** | **erfind. Beispiel** |
|---|---|---|
| Im Kneter gemischt: | | |
| Lösungs-SBR Buna VSL 2035-0 (Bayer AG) | 75 | 0 |
| Kautschuk gemäß Beispiel 1 | 0 | 75 |
| Polybutadien-Kautschuk Buna CB 11 (Bayer AG) | 25 | 25 |
| gefällte Kieselsäure Vulkasil S (Bayer AG) | 80 | 80 |
| Ruß Corax N 339 (Degussa) | 6,5 | 6,5 |
| aromatischer Weichmacher Renopal 450 | 32,5 | 32,5 |
| Zinkoxid | 2,5 | 2,5 |
| Stearinsäure | 1 | 1 |
| Antioxidans Vulkanox 4020 (Bayer AG) | 1 | 1 |
| Ozonschutzwachs Antilux 654 (Rheinchemie) | 1,5 | 1,5 |
| Silan Si 69 (Degussa) | 3,5 | 3,5 |

| Auf der Walze (50° C) zugemischt: | | |
|---|---|---|
| Schwefel | 1,5 | 1,5 |
| N-Cyclohexyl-mercaptobenzthiazolsulfenamid Vulkacit CZ | 1,5 | 1,5 |
| Diphenylguanidin Vulkacit D (Bayer AG) | 2 | 2 |
| | | |
| Mooney Viskosität ML 1+4 (100° C) | 106 | 106 |

| Vulkanisationskinetik bei 160° C: | | |
|---|---|---|
| Zeit bis 6 % des Drehmomentendwertes (Minuten) | 2,3 | 2,1 |
| Zeit bis 90 % des Drehmomentendwertes (Minuten) | 15,2 | 14,2 |
| | | |

| Die Kautschukmischungen wurden anschließend 30 Minuten bei 160°C vulkanisiert. Die Vulkanisate hatten folgende Eigenschaften: | | |
|---|---|---|
| Spannungswert bei 300 % Dehnung (MPa) | 8,8 | 12,9 |
| Zugfestigkeit (MPa) | 17,4 | 19,9 |
| Bruchdehnung (%) | 520 | 459 |
| Härte bei 23° C (Shore A) | 75 | 79 |
| Rückprallelastizität bei 23° C (%) | 26 | 30 |
| Rückprallelastizität bei 70° C (%) | 39 | 45 |
| Abrieb nach DIN 53 516 (ccm) | 101 | 85 |

## Patentansprüche

1. Kautschukmischungen, bestehend aus einem Kautschuk und 10 bis 500 Gew.-Teilen eines Füllstoffs, bezogen auf 100 Gew.-Teile Kautschuk, wobei der Kautschuk durch Polymerisation in Lösung hergestellt wurde und einen Gehalt an einpolymerisierten Aminoisoprenen der Formel 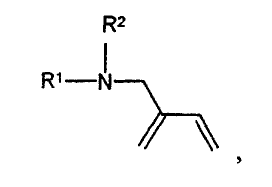 in der
R¹ und R² unabhängig voneinander für C₁-C₁₈-Alkyl- oder C₅-C₁₂-Cycloalkylreste, die gegebenfalls durch ein oder mehrere Stickstoff-, Sauerstoff- und/oder Schwefelatome unterbrochen sein können oder gemeinsam einen Ring bilden können, sowie für C₆-C₁₈-Aryl- oder C₇-C₂₄-Alkylarylreste stehen,
von 0,01 bis 100 Gew.-%, ein Gehalt an Diolefinen von 0 bis 99,99 Gew.-%, sowie einen Gehalt an einpolymerisierten vinylaromatischen Monomeren von 0 bis 50 Gew.-% besitzt, jeweils bezogen auf den Lösungskautschuk, und ein mittleres Molgewicht (Zahlenmittel) von 10 000 bis 2 000 000 und darüber hinaus eine Glasübergangstemperatur von -110°C bis +20°C aufweist.

2. Kautschukmischungen gemäß Anspruch 1, **dadurch gekennzeichnet, daß** die Kautschukmischungen 20 bis 200 Gew.-Teile eines Füllstoffes, bezogen auf 100 Gew.-Teile an Kautschuk, enthalten.

3. Kautschukmischungen nach Anspruch 1, **dadurch gekennzeichnet, daß** die Kautschuke einen Gehalt an gebundenen Aminoisoprenen von 0,1 bis 10 Gew.-% besitzen.

4. Kautschukmischungen nach Anspruch 1, **dadurch gekennzeichnet, daß** die Kautschuke neben den einpolymerisierten Aminoisprenen einen Gehalt an einpolymerisierten vinylaromatischen Monomeren von 0 bis 45 Gew.-% und einen Gehalt an einpolymerisierten weiteren Diolefinen von 55 bis 99,9 Gew.-% besitzen.

5. Verwendung der Kautschukmischungen nach Anspruch 1 zur Herstellung von Kautschuk-Formkörpern, insbesondere zur Herstellung von Reifen.

## Revendications

1. Caoutchoucs chargés consistant en un caoutchouc et 10 à 500 parties en poids d'une matière de charge pour 100 parties en poids du caoutchouc, le caoutchouc ayant été préparé par polymérisation en solution et contenant à l'état polymérisé des aminoisoprènes de formule 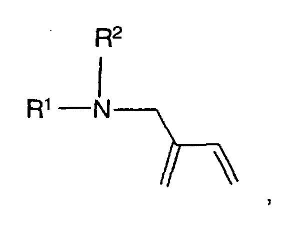 dans laquelle
R¹ et R² représentent chacun, indépendamment l'un de l'autre, un groupe alkyle en C₁-C₁₈ ou cycloalkyle en C₅-C₁₂ qui peut le cas échéant être interrompu par un ou plusieurs atomes d'azote, d'oxygène et/ou de soufre, ou bien R¹ et R² forment ensemble un cycle, ou bien R¹ et R² représentent des radicaux aryle en C₆-C₁₈ ou alkylaryle en C₇-C₂₄, en proportion de 0,01 à 100 % en poids, des dioléfines en proportion de 0 à 99,99 % en poids, et, à l'état polymérisé, des monomères vinylaromatiques en proportion de 0 à 5 % en poids, tous ces pourcentages se rapportant au caoutchouc préparé par-polymérisation en solution, et un poids moléculaire moyen (moyenne en nombre) de 10 000 à 2 000 000 et en outre une température de transition du second ordre allant de -110 à +20°C.

2. Caoutchoucs chargés selon revendication 1, **caractérisés en ce qu'**ils contiennent de 20 à 200 parties en poids d'une matière de charge pour 100 parties en poids du caoutchouc.

3. Caoutchoucs chargés selon revendication 1, **caractérisés en ce que** les caoutchoucs contiennent à l'état combiné des aminoisoprènes en proportion de 0,1 à 10 % en poids.

4. Caoutchoucs chargés selon revendication 1, **caractérisés en ce que** les caoutchoucs, en plus des aminoisoprènes à l'état polymérisé contiennent, à l'état polymérisé, des monomères vinylaromatiques en proportion de 0 à 45 % en poids et d'autres dioléfines en proportion de 55 à 99,9 % en poids.

5. Utilisation des caoutchoucs chargés selon revendication 1 pour la fabrication de corps moulés en caoutchouc, en particulier de pneumatiques.

## Claims

1. Rubber compounds consisting of a rubber and 10 to 500 parts by weight of a filler based on 100 parts by weight rubber, wherein the rubber has been produced by polymerisation in solution and has a content of aminoisoprenes, which are incorporated by polymerisation, of formula 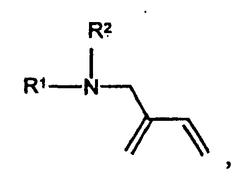 wherein
R¹ and R², independently of each other, represent C₁-C₁₈ alkyl- or C₅-C₁₂ cycloalkyl radicals, which can optionally be interrupted by one or more nitrogen, oxygen and/or sulphur atoms or which can jointly form a ring, and also represent C₆-C₁₈ aryl- or C₇-C₂₄ alkylaryl radicals,
from 0.01 to 100 % by weight, a content of diolefines from 0 to 99.99 % by weight, and a content of aromatic vinyl monomers, incorporated by polymerisation, from 0 to 50 % by weight, based on the solution rubber in each case, and has a (number average) mean molecular weight from 10,000 to 2,000,000 and in addition has a glass transition temperature from -110°C to +20°C.

2. Rubber compounds according to claim 1, **characterised in that** the rubber compounds contain 20 to 200 parts by weight of a filler based on 100 parts by weight of rubber.

3. Rubber compounds according to claim 1, **characterised in that** the rubbers have a content of bound aminoisoprenes from 0.1 to 10 % by weight.

4. Rubber compounds according to claim 1, **characterised in that**, in addition to the aminoisoprenes incorporated by polymerisation, the rubbers have a content of aromatic vinyl monomers, which are incorporated by polymerisation, from 0 to 45 % by weight and a content of other diolefines, which are incorporated by polymerisation, from 55 to 99.9 % by weight.

5. The use of the rubber compounds according to claim 1 for the production of rubber mouldings, particularly for the production of tyres.
